# EUROPEAN PATENT SPECIFICATION

(11) **EP 3 920 441 B1**
(45) Date of publication and mention of the grant of the patent: **17.06.2026**
(21) Application number: 20178176.2
(22) Date of filing: 04.06.2020
(51) Int. Cl.: H04L 1/00, H04J 3/06

(54) **METHOD AND APPARATUS FOR PRE-INTERLEAVING OF PHYSICAL SYNCHRONIZATION BLOCKS**
VERFAHREN UND VORRICHTUNG ZUR VORVERSCHACHTELUNG VON PHYSIKALISCHE SYNCHRONISIERUNGSBLÖCKEN
PROCÉDÉ ET APPAREIL DE PRÉ-ENTRELACEMENT DE BLOCS DE SYNCHRONISATION PHYSIQUE

(43) Date of publication of application: 08.12.2021
(73) Proprietor: Nokia Solutions and Networks Oy, 02610 Espoo (FI)
(72) Inventor: LEFEVRE, Yannick, 2018 Antwerp (BE); MAES, Jochen, 2018 Antwerp (BE)
(74) Representative: Louis Pöhlau Lohrentz

(56) References cited:
- US-A- 5 303 241
- US-A1- 2009 276 681
- US-B1- 7 278 081
- US-B1- 7 295 554
- TIMOTHY P WALKER AMCC USA: "OTNtutorial", ITU-T DRAFT ; STUDY PERIOD 2001-2004, INTERNATIONAL TELECOMMUNICATION UNION, GENEVA ; CH, vol. Study Group 15, 19 May 2004 (2004-05-19), pages 1 - 62, XP017503106, [retrieved on 20040519]
- CCSDS SECRETARIAT: "Blue Book: TM SYNCHRONIZATION AND CHANNEL CODING", 1 September 2017 (2017-09-01), XP093336222, Retrieved from the Internet <URL:http://public.ccsds.org/publications/>

## Description

### Field of the invention

Various example embodiments relate to methods and apparatus used in passive optical networks.

### Background

Next-generation passive optical networks (PONs) are used to deliver broadband access. PON systems have a point-to-multi-point (P2MP) topology, in which one optical line terminal (OLT) at the network side is used to connect to a multitude (e.g., up to 64) of optical network units (ONUs) at the user side by means of an optical distribution network (ODN) or fiber plant that contains optical fibers and splitters, but no active components. PONs may further be used to back- or fronthaul mobile cells, to aggregate sensors and actuators in Industrial Internet of Things, or to provide P2MP networking inside enterprise buildings. It is noted that, pertaining to the present disclosure, the terminology ONU and ONT for Optical Network Terminal may be used interchangeably.

In PON systems, the downstream data is transmitted as a stream of PHY (physical layer) data frames. The data frames have a fixed length (typical 125 microseconds).

Each transmitted PHY frame comprises typically of a physical synchronization block (PSBd) and a framing sublayer (FS) frame. The PSBd consists of three parts:
- a fixed bit pattern called the PSync, which is used by the ONUs to frame-synchronize, i.e., to locate the start of the PHY data frames;
- a superframe counter (SFC) which is a counter that increments with each PHY frame and which is used to verify the synchronization and is also used for several other important system features;
- operation control (OC) information containing system information about the PON network.

The FS frame comprises the data that is being transmitted to the different ONUs.

To be able to correct errors inserted due to the transmission over the PON link, the data is encoded by means of a forward error correction (FEC) code, which for instance uses K information bits and N transmitted bits. In case of next-generation PON systems, this will highly likely be a low density parity check (LDPC) code. To have an integer number of codewords in a frame, it is deseriable that the PSBd is also encoded in the first FEC codeword (CW) of the FEC code.

Recently, it has been proposed to perform inter-codeword interleaving. The reason is that bursts of errors at the receiver can degrade the FEC performance. This can be countered by interleaving several codewords on a basis of b bits (which should be preferably 1 or a few bits), to spread the burst of errors over several CWs.

According to the state of the art, the PSBd is encoded in the first CW.

US patent US 7 278 081 B1 (BLAIR JAMES LEROY [US] ETAL) of 2 October 2007 discloses encoding and mapping OH data onto a frame. In one embodiment, sixteen Reed-Solomon codewords (110, 112, 114, etc.) are first constructed, each containing 255 bytes with one OH byte at the first position, followed by 238 client data bytes and 16 FEC parity bytes. The FEC encoding operation generates the parity bytes for each codeword based on the OH byte, client data, and potentially FDC bytes within that codeword. After FEC encoding, the sixteen codewords are byte-wise interleaved to construct row 116, wherein the OH byte from each codeword is sequentially placed at positions 1 through 16, creating sixteen consecutive OH bytes at the beginning of the transmitted frame row.

US5303241A discloses a multiplexing system for word interleaved higher order signals in a digital communication system.

### Summary of the Invention

According to the state of the art, as a consequence of the inter-CW interleaving, the PSBd is interleaved with part of the following CW(s) and will thus no longer form one consecutive sequence in the transmitted bit sequence. This makes it difficult for the ONU to frame synchronize, i.e., this makes it difficult for the ONUs to locate the PSync pattern (and also the SFC) in the bit pattern, as the sequence is spread out over a larger number of bits.

Thus, an objective of the invention is to provide a structure of the PHY frame that is easy for the ONUs to locate the PSync pattern.

The object of the invention is achieved by the method and apparatus according to the claims.

According to the present invention, the blocks of the PSBd are pre-interleaved on the first N codewords, which is exactly compensated by the inter-CW interleaving that is applied afterwards. The result is that the PSBd will be transmitted as one consecutive sequence in the data stream at the beginning of the frame, regardless of the value of M. This means that a new ONU will be able to locate the PSync and synchronize even if the M is configurable (and thus unknown a priori by the ONU). The synchronization method does also not have to be modified to the M value, but legacy methods corresponding to M=1 operation can be reused for any M value. This leads to a lower complexity than if the PSBd is spread out over a number of bits that depends on M.

### Brief description of the figures

Fig. 1 depicts a schematic block diagram of a network topology according to an embodiment of the present application;
Fig. 2 depicts a structure of a PHY frame according to state of the art;
Fig. 3 depicts another structure of a PHY frame according to state of the art;
Fig. 4 depicts a schematic diagram of a method in OLT according to one embodiment of the present invention;
Fig. 5 depicts a schematic diagram of a method in OLT according to another embodiment of the present invention;
Fig. 6 depicts a schematic diagram of a method in ONU according to one embodiment of the present invention;
Fig. 7 depicts a schematic diagram of a method in OLT according to another embodiment of the present invention;
Fig. 8 depicts a block diagram of an OLT according to one embodiment of the present invention;
Fig. 9 depicts a block diagram of an ONU according to one embodiment of the present invention.

Same or similar reference numerals refer to same or similar parts or components.

### Detailed description

Example embodiments of the present application are described herein in detail and shown by way of example in the drawings. It should be understood that, although specific embodiments are discussed herein there is no intent to limit the scope of the invention to such embodiments. To the contrary, it should be understood that the embodiments discussed herein are for illustrative purposes, and that modified and alternative embodiments may be implemented without departing from the scope of the invention as defined in the claims. The sequence of method steps are not limited to the specific embodiments, the method steps may be performed in other possible sequence. Similarly, specific structural and functional details disclosed herein are merely representative for purposes of describing the embodiments. The invention described herein, however, may be embodied in many alternate forms and should not be construed as limited to only the embodiments set forth herein.

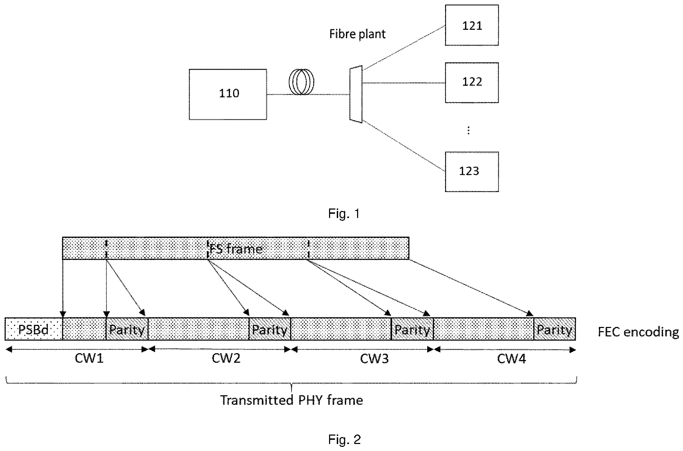

Fig.1 shows a schematic block diagram of a network topology according to an embodiment of the present application.

As shown in Fig. 1 in a PON, an OLT 110 at the network side is communicatively connected to a plurality of optical network units (ONUs) 121, 122, ..., 123 at the user side by means of an optical distribution network (ODN) or fiber plant that contains optical fibers and splitters, but no active components.

Most PON technologies such as G-PON, E-PON, and XGS-PON are time-division multiplexing (TDM) PON technologies, in which the fiber medium is shared in time between the different ONUs. Also time- and wavelength-division multiplexing (TWDM) PON technologies exist, such as NG-PON2, in which multiple TDM systems at different wavelengths are stacked on the same PON system. The present invention applies to both TDM and TWDM PON systems.

Fig. 2 shows the structure of a PHY frame according to state of the art.

In Fig. 2, the PSBd is encoded in the first FEC codeword (CW) of the FEC code. This is achieved by dividing the joint set of bits of the PSBd and the FS frame into groups of K bits. Each K bits are then encoded by the FEC code, thus leading to N-K parity bits that are appended to the K bits. The total N bits consisting of the K information bits and the N-K parity bits correspond to 1 FEC CW. The sequence of all CWs that contain the PSBd and the corresponding FS frame make up the PHY frame. This PHY frame can still be scrambled before transmission to avoid long sequences of consecutive identical digits. Alternatively, the scrambling (of the FS frame) could also be done before the FEC encoding. Note that the PSBd is often separately scrambled from the data.

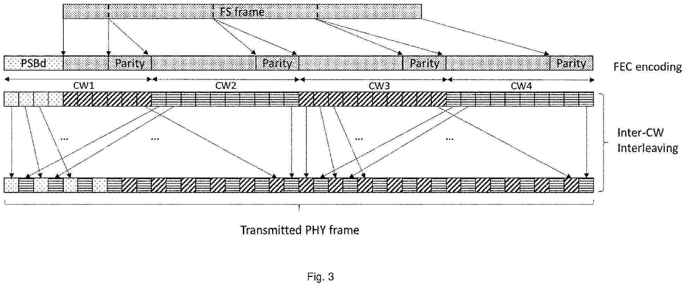

Fig. 3 shows another structure of a PHY frame according to state of the art.

Fig. 3 illustrates the structure of a PHY frame, when inter-CW interleaving over 2 CWs is applied. According to the state of the art, the PSBd is encoded in the first codeword CW1. As a consequence of the inter-CW interleaving, the PSBd is interleaved with part of the second codeword CW2, and will thus no longer form one consecutive sequence in the transmitted bit sequence. This makes it difficult for the ONU to frame synchronize, i.e., this makes it difficult for the ONUs to locate the PSync pattern (and also the SFC) in the bit pattern, as the sequence is spread out over a larger number of bits. In addition, how much the PSBd is spread out will depend on the number of CWs that are interleaved. It is preferred that this number would be configurable (e.g., that the interleaving can be turned off), but this would not be possible with the approach of Figure 3, as a new ONU that initializes cannot know what interleaving setting the OLT would be using.

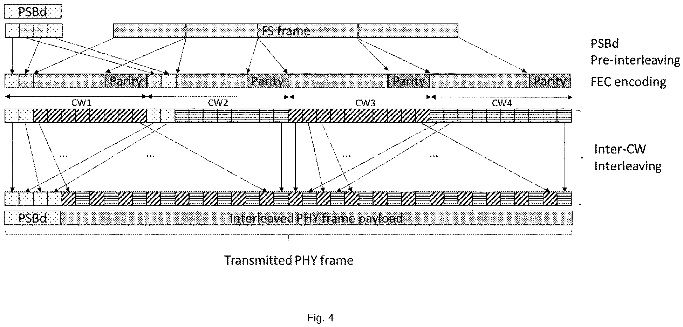

Fig.4 shows a schematic diagram of a method in OLT according to one embodiment of the present invention.

According to the method of the present invention, a predetermined number of codewords are generated for a downstream frame. Furthermore, the first N codewords comprise in their first bit values at least one block of b bits of a physical synchronization block corresponding to the downstream frame, N ≥2, b≥1; wherein, the blocks of the physical synchronization block are interleaved on the first N codewords.

In the embodiment shown in Fig. 4, four codewords CW1-CW4 are generated. A skilled person shall understand this number is merely an example, the predetermined number may be another integral number higher than 2. In Fig. 4, the first N=2 codewords CW1 and CW2 comprise in their first bit values two blocks of b bits of the PSBd corresponding to the downstream frame. A skilled person shall understand that N is less than or equal to the predetermined number. Furthermore, the blocks of the PSBd are interleaved on the first two codewords, namely, the first codeword CW1 comprises the first and the third block of the PSBd, while the second codeword CW2 comprises the second and the fourth block of the PSBd.

Then, inter-codeword interleaving is performed on the predetermined number of codewords, thereby obtaining a physical layer data frame, wherein, the physical synchronization block forms a consecutive sequence at the beginning of the physical layer data frame.

In one embodiment, the inter-codeword interleaving is performed by interleaving every M codewords per b bit. Specifically, according to the claimed invention, at least one of the first N codewords comprises respectively two or more blocks of physical synchronization block, M=N; and in a not claimed example, the first N codewords comprise respectively one block of physical synchronization block, M≥N.

In the exemplary embodiment shown in Fig. 4, N=M=2. A skilled person shall understand that in other implementations, the value of N and M may be different from the given example. In another example, 4 codewords are generated, wherein, the first N=2 codewords comprise respectively one block of the PSBd. Then the 4 codewords may be inter-codeword interleaved on a basis of M=2. The resulted PHY frame comprise the PSBd as a consecutive sequence at the beginning.

In one embodiment of the present invention, sequential blocks of b bits of the PSBd are interleaved onto the first N codewords, specifically from the beginning of the physical synchronization block. The PSBd may be updated according to at least part of the super frame counter before it is divided into blocks and interleaved onto the codewords.

In the exemplary embodiment shown in Fig. 4, the PSBd is divided into four sequential blocks of b bits. Then the four blocks are interleaved onto the first two codewords CW1 and CW2, specifically in a round robin fashion, which may also be called pre-interleaving in the present application. As a result, the first codeword CW1 comprises the first and the third block of the PSBd and the second codeword CW2 comprises the second and the fourth block of the PSBd. All the codewords CW1-CW4 are then filled up with the FS frame and FEC encoded.

Then the subsequent inter-CW interleaving exactly counteracts the pre-interleaving of the PSBd, and makes that the PSBd is located as one consecutive sequence at the start of the PHY frame. This PHY frame is then, possibly after scrambling (the data part) transmitted to the plurality of optical network units 121, 122, 123 communicatively connected to the OLT 110.

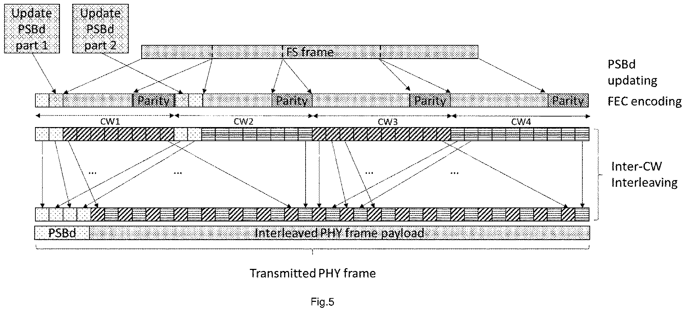

Fig. 5 shows a schematic diagram of a method in OLT according to another embodiment of the present invention.

In the embodiment discussed above, the present invention is implemented using an explicit pre-interleaving function, that takes for each frame the PSBd of the frame and pre-interleaves it to spread the PSBd over the different CWs. However, the same functionality can also be achieved in other ways. For example, In the embodiment shown in Fig. 5, at least part of the blocks of the PSBd in a codeword is updated based on at least part of a super frame counter.

Specifically, from one frame to the next, only a small part of the PSBd will change: only the SFC is incremented, while the PSync remains the same as well as (typically) the OC information. Hence, the proposed invention can also be achieved by updating in each CW the corresponding blocks of the PSBd that change.

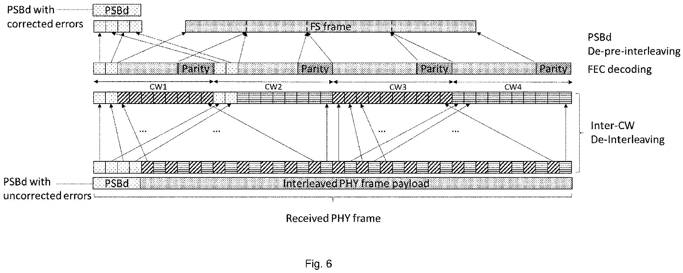

Fig. 6 shows a schematic diagram of a method in ONU according to one embodiment of the present invention.

According to the method of the present invention, an ONU 121, 122, 123 receives a physical layer data frame from the optical line terminal 110, wherein, a PSBd corresponding to the physical layer data frame forms a consecutive sequence at the beginning of the physical layer data frame.

Specifically, the received data frame contains errors, and the beginning of the data frame corresponds to the PSBd with uncorrected errors.

Then inter-codeword de-interleaving is performed possibly after descrambling (the data) for the physical layer data frame based on parameters related to inter-codeword interleaving, obtaining a predetermined number of codewords. Inter-codeword de-interleaving may be carried out in any way known to a skilled person. In one embodiment, one or more of the parameters related to inter-codeword interleaving are predetermined or received from the OLT.

In a preferred embodiment, during regular frame-synchronized operation (i.e., in the operation when the frame boundaries are identified by the ONU and data is being decoded), after locating the PSync, the ONU 121, 122, 123 can then identify the system information contained within the PSBd. The value of M may be communicated in this part of the PSBd, so that the ONU 121, 122, 123 can, after determining the right M value in the PSBd, initialize its inter-CW interleaver and decode the CWs. In another example, the value b and/or M is predetermined in the ONU 121, 122, 123. In yet another example, the value b and/or M is communicated from the OLT 110 to the ONU 121, 122, 123 in another way, for example using a side communication channel such as a second lower-rate PON link operating at a different wavelength.

According to the method of the present invention, after inter-codeword de-interleaving, a certain number of codewords which still contain errors are obtained, among which the first N codewords comprises in their first bit values at least one block of b bits of a physical synchronization block corresponding to the downstream frame, N ≥2, b≥1; The blocks of the physical synchronization block are interleaved on the first N codewords.

In the exemplary embodiment shown in Fig. 6, four codewords CW1-CW4 are obtained after inter-codeword de-interleaving. The first two codewords CW1 and CW2 comprise respectively two interleaved blocks of the PSBd at their first bit values.

According to the method of the present invention, at least one of the first N codewords may be decoded to correct errors, then interleaved blocks of the PSBd may be extracted from the at least one decoded codeword, obtaining at least part of the decoded physical synchronization block.

In the exemplary embodiment shown in Fig. 6, two blocks of the PSBd are extracted respectively from the first two codewords CW1 and CW2 and de-interleaved, thereby reconstructing the PSBd with corrected errors, while the remaining information bits of the CWs are extracted to obtain the decoded FS frame.

In regular frame-synchronized operation, the PSBd can be used to verify that the ONU is still correctly frame-synchronized. This can be done by verifying that the PSync pattern and SFC value in the received PSBd matches (with a limited numer of errors) the expected PSync pattern and SFC value. With the present invention, this verification can be done both on the PSBd with uncorrected errors (before inter-CW interleaving) or on the PSBd with corrected errors (after de-pre-interleaving and decoding). Note that for the former implementation, the de-pre-interleaving is not necessary to be executed by an ONU receiver. The ONU can also extract (if any are necessary) the necessary blocks of the PSBd with corrected errors from the CWs.

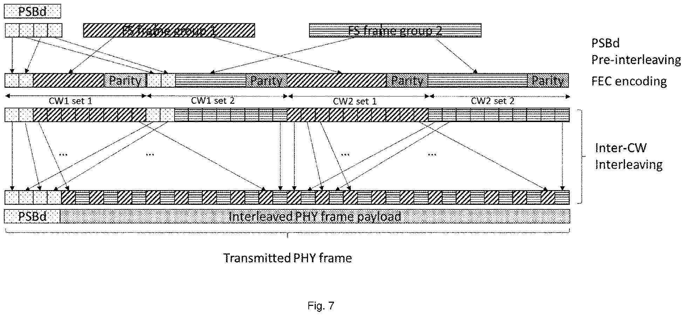

Fig. 7 shows a schematic diagram of a method in OLT according to another embodiment of the present invention.

In the embodiment shown in Fig. 7, all the ONUs ONU 121, 122,...,123 are separated into 2 groups, the data for the ONUs 121, 122, ..., 123 are grouped into 2 sets of codewords, set 1 and set 2. In other implementation, the data for the ONUs 121, 122, 123 may be grouped into more than 2 sets of codewords.

In Fig. 7, the codewords set 1 comprises data for a subset of the ONUs and codewords set 2 comprises data for the other subset of the ONUs.

Preferably, the first N codewords are part of a different set of the G sets of codewords, and wherein G equals N. Specifically, in the example shown in Fig7, the blocks of PSBd are distributed to both sets of codewords.

Thus, the overhead of the PSBd is equally divided over all the CW groups. Even in the more general case where G≠N, the overhead is divided more fairly than without the pre-interleaving. Without the pre-interleaving, the entire PSBd, and thus all the overhead, is inserted in the first CW and thus the first group only.

In the following, the processing of the PHY frame in a receiver in the ONU is also elaborated with respect to Fig. 7 in a reversed sequence.

Accordingly, after receiving the PHY frame according to the embodiment of Fig. 7, the ONU 121, 122, ..., 123 determines a set of codewords corresponding to the group of ONUs 121, 122, ..., 123 to which it is assigned to according to a set configuration and decodes the set of codewords. The set configuration is predetermined or received from the OLT 110. In a preferred embodiment, the set configuration is communicated from the OLT 110 to the ONU in the system information part of the PSBd. Even if an ONU 121, 122, ..., 123 is a new ONU in the system, it may also extract the set configuration from the PSBd after locating the PSync.

In this embodiment, each ONU only has to decode the CWs of its own set, and can discard the other CWs. Also, potentially different groups can use a different code rate (i.e., a different number of information bits K while the codeword length N is constant), thus allowing to adapt the FEC protection to the channel quality of the ONUs in the group.

With the pre-interleaving and if N=G, CWs of each set contain part of the PSBd. This means that if an ONU decodes the CWs corresponding to its group, it will still obtain a part of the PSBd (roughly 1/G) with corrected errors. This corrected part of the PSBd can be compared to the corresponding expected bit values based on which can be evaluated whether the ONU is still correctly frame synchronized. Without the pre-interleaving, only the first CW contains the PSBd, and thus only ONUs of the first CW group can verify the synchronization based on (part of) the corrected PSBd.

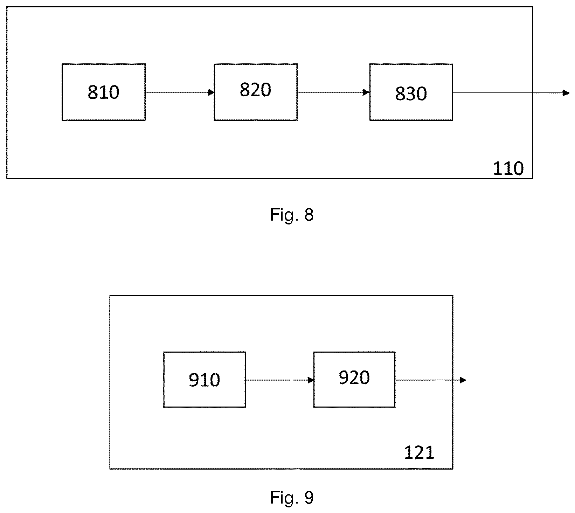

Fig. 8 shows a block diagram of an OLT according to one embodiment of the present invention.

In Fig. 8, the OLT 110 comprises a codewords generating module 810, an inter-codeword interleaving module 820, and a transmitting module 830.

The codewords generating module 810 is configured to generate a predetermined number of codewords for a downstream frame, wherein, the first N codewords comprise in their first bit values at least one block of b bits of a physical synchronization block corresponding to the downstream frame, N ≥2, b≥1; wherein, the blocks of the physical synchronization block are interleaved on the first N codewords.

The inter-codeword interleaving module 820 is configured to perform on the predetermined number of codewords, thereby obtaining a physical layer data frame, wherein, the physical synchronization block forms a consecutive sequence at the beginning of the physical layer data frame;

The transmitting module 830, is configured to transmit the physical layer data frame to the plurality of optical network units 121, 122, 123.

In one embodiment, the codewords generating module 810 further comprises a pre-interleaving module (not shown), configured to interleaving sequential blocks of b bits of the physical synchronization block onto the first N codewords from the beginning of the physical synchronization block.

In another embodiment, the codewords generating module 810 further comprises a updating module (not shown), configured to update at least part of the blocks of the physical synchronization block in a codeword based on at least part of a super frame counter.

Fig. 9 shows a block diagram of an ONU according to one embodiment of the present invention.

In Fig. 9, the ONU 121, 122, 123 comprises a receiving module 910, and an inter-codeword de-interleaving module 920.

The receiving module 910 is configured to receive a physical layer data frame from the optical line terminal 110, wherein, a physical synchronization block corresponding to the physical layer data frame forms a consecutive sequence at the beginning of the physical layer data frame.

The inter-codeword de-interleaving module 920 is configured to perform inter-codeword de-interleaving for the physical layer data frame based on parameters related to inter-codeword interleaving, obtaining a predetermined number of codewords, wherein, the first N codewords comprises in their first bit values at least one block of b bits of a physical synchronization block corresponding to the downstream frame, N ≥2, b≥1; wherein, the blocks of the physical synchronization block are interleaved on the first N codewords.

## Claims

1. A method in an optical line terminal (110) communicatively connected to a plurality of optical network units (121, 122, 123), comprising:
- obtaining a physical synchronization block corresponding to a downstream frame,
- updating the physical synchronization block based on at least part of a super frame counter ;
- generating a predetermined number of codewords for the downstream frame, comprising:
- pre-interleaving sequential blocks of b bits of the physical synchronization block corresponding to the downstream frame from the beginning of the physical synchronization block onto the first N codewords in a round robin fashion, thereby the first N codewords comprise in their first bit values at least one block of b bits of the physical synchronization block, N ≥2, b≥1, and at least one of the first N codewords comprise respectively two or more blocks of b bits of the physical synchronization block, and
- encoding the predetermined number of codewords by means of a forward error correction, FEC, code;
- performing inter-codeword interleaving on the predetermined number of FEC encoded codewords, thereby obtaining a physical layer data frame, wherein, the physical synchronization block is reestablished as a consecutive sequence at the beginning of the physical layer data frame;
- transmitting the physical layer data frame to the plurality of optical network units (121, 122, 123); wherein the inter-codeword interleaving comprises:
- interleaving M codewords, wherein a length of interleaving blocks is b bit, wherein, M=N.

2. The method according to claim 1, further comprising:
- communicating at least one or more of b and M to the ONUs (121, 122, 123).

3. The method according to any of claims 1-2, further comprising:
- updating at least part of the blocks of the physical synchronization block in a codeword based on at least part of the super frame counter.

4. The method according to any of claims 1-3, further comprising:
- grouping data for the ONUs (121, 122, 123) into G sets of codewords, wherein a set of codewords comprises data for a subset of the ONUs (121, 122, 123).

5. The method according to claim 4, wherein the first N codewords are part of a different set of the G sets of codewords, and wherein G equals N.

6. A method in an optical network unit (121, 122, 123) communicatively connected to an optical line terminal (110), comprising:
- receiving a physical layer data frame from the optical line terminal (110), wherein, a physical synchronization block corresponding to the physical layer data frame forms a consecutive sequence at the beginning of the physical layer data frame, and wherein the physical synchronization block is updated according to at least part of a super frame counter;
- locating the physical synchronization block;
- synchronizing based on the physical synchronization block;
- performing inter-codeword de-interleaving for the physical layer data frame based on parameters related to inter-codeword interleaving in a round robin fashion, obtaining a predetermined number of codewords, wherein, the first N codewords comprise in their first bit values at least one block of b bits of the physical synchronization block corresponding to the physical layer data frame, N ≥2, b≥1; wherein, the blocks of the physical synchronization block are interleaved on the first N codewords; and at least the first codeword comprises two or more blocks of b bits of the physical synchronization block;
- decoding at least the first codeword and extracting interleaved blocks of the physical synchronization block from the at least one decoded codeword,
- obtaining at least part of the decoded physical synchronization block.

7. The method according to claim 6, wherein, one or more of the parameters related to inter-codeword interleaving are predetermined or received from the OLT (110).

8. The method according to any of claims 6-7, further comprising:
- determining a set of codewords corresponding to a group of ONUs to which it is assigned to according to a set configuration, wherein, the set configuration is predetermined or received from the OLT (110);
- decoding the set of codewords.

9. An optical line terminal (110) communicatively connectable to a plurality of optical network units (121, 122, 123), comprising:
- means for obtaining a physical synchronization block corresponding to a downstream frame;
- means for updating the physical synchronization block based on at least part of a super frame counter;
- codewords generating module (810), configured to generate a predetermined number of codewords for a downstream frame,
wherein, the codewords generating module (810) further comprises:
a pre-interleaving module, configured to obtain a physical synchronization block corresponding to the downstream frame, wherein the physical synchronization block is updated according to at least part of a super frame counter, and to interleave sequential blocks of b bits of the physical synchronization block corresponding to the downstream frame from the beginning of the physical synchronization block onto the first N codewords in a round robin fashion, thereby, the first N codewords comprise in their first bit values at least one block of b bits of the physical synchronization block, N ≥2, b≥1; and at least one of the first N codewords comprise respectively two or more blocks of b bits of the physical synchronization block; and
means for encoding the predetermined number of codewords by means of a forward error correction, FEC, code;
- an inter-codeword interleaving module (820), configured to perform on the predetermined number of FEC encoded codewords, thereby obtaining a physical layer data frame, wherein, the physical synchronization block is reestablished as a consecutive sequence at the beginning of the physical layer data frame; wherein the inter-codeword interleaving module (820) is further configured to interleave M codewords, wherein a length of interleaving blocks is b bit, wherein, M=N;
- a transmitting module (830), configured to transmit the physical layer data frame to the plurality of optical network units (121, 122, 123).

10. The optical line terminal (110) according to claim 9, wherein, the codewords generating module (810) further comprises:
an updating module, configured to update at least part of the blocks of the physical synchronization block in a codeword based on at least part of the super frame counter.

11. An optical network unit (121, 122, 123) communicatively connectable to an optical line terminal (110), comprising:
- a receiving module (910), configured to receive a physical layer data frame from the optical line terminal (110), wherein, a physical synchronization block corresponding to the physical layer data frame forms a consecutive sequence at the beginning of the physical layer data frame, and wherein the physical synchronization block is updated according to at least part of a super frame counter;
- a module for locating the physical synchronization block;
- a module for synchronizing based on the physical synchronization block;
- an inter-codeword de-interleaving module (920), configured to perform inter-codeword de-interleaving for the physical layer data frame based on parameters related to inter-codeword interleaving in a round robin fashion, obtaining a predetermined number of codewords, wherein, the first N codewords comprise in their first bit values at least one block of b bits of the physical synchronization block corresponding to the physical layer data frame, N ≥2, b≥1; wherein, the blocks of the physical synchronization block are interleaved on the first N codewords; and at least the first codeword comprises two or more blocks of b bits of the physical synchronization block;
- means for decoding at least the first codeword and extracting interleaved blocks of the physical synchronization block from the at least one decoded codeword,
- means for obtaining at least part of the decoded physical synchronization block.

## Patentansprüche

1. Verfahren in einem optischen Leitungsabschluss (110), der kommunikativ mit einer Vielzahl von optischen Netzwerkeinheiten (121, 122, 123) verbunden ist, umfassend:
- das Erhalten eines physikalischen Synchronisationsblocks, der einer Abwärtstrame entspricht,
- das Aktualisieren des physikalischen Synchronisationsblocks basierend auf mindestens einem Teil eines Superrahmenzählers;
- das Erzeugen einer vorbestimmten Anzahl von Codewörtern für die Abwärtstrame, umfassend:
- das Vor-Verschachteln sequentieller Blöcke von b Bits des physikalischen Synchronisationsblocks, der der Abwärtstrame entspricht, vom Anfang des physikalischen Synchronisationsblocks auf die ersten N Codewörter in einer Round-Robin-Weise, sodass die ersten N Codewörter in ihren ersten Bitwerten mindestens einen Block von b Bits des physikalischen Synchronisationsblocks umfassen, N ≥ 2, b ≥ 1, und mindestens eines der ersten N Codewörter jeweils zwei oder mehr Blöcke von b Bits des physikalischen Synchronisationsblocks umfasst, und
- das Codieren der vorbestimmten Anzahl von Codewörtern mittels einer Vorwärtsfehlerkorrektur, FEC-Code;
- das Durchführen einer Inter-Codewort-Verschachtelung an der vorbestimmten Anzahl von FEC-codierten Codewörtern, wodurch eine Datenrahmen der physikalischen Schicht erhalten wird, wobei der physikalische Synchronisationsblock als eine aufeinanderfolgende Sequenz am Anfang des Datenrahmens der physikalischen Schicht wiederhergestellt wird;
- das Übertragen des Datenrahmens der physikalischen Schicht an die Vielzahl von optischen Netzwerkeinheiten (121, 122, 123); wobei die Inter-Codewort-Verschachtelung umfasst:
- das Verschachteln von M Codewörtern, wobei eine Länge der Verschachtelungsblöcke b Bits beträgt,
wobei M=N.

2. Verfahren nach Anspruch 1, ferner umfassend:
- das Kommunizieren von mindestens einem von b und M an die ONUs (121, 122, 123).

3. Verfahren nach einem der Ansprüche 1-2, ferner umfassend:
- das Aktualisieren mindestens eines Teils der Blöcke des physikalischen Synchronisationsblocks in einem Codewort basierend auf mindestens einem Teil des Superrahmenzählers.

4. Verfahren nach einem der Ansprüche 1-3, ferner umfassend:
- das Gruppieren von Daten für die ONUs (121, 122, 123) in G Sätze von Codewörtern, wobei ein Satz von Codewörtern Daten für eine Teilmenge der ONUs (121, 122, 123) umfasst.

5. Verfahren nach Anspruch 4, wobei die ersten N Codewörter Teil eines unterschiedlichen Satzes der G Sätze von Codewörtern sind, und wobei G gleich N ist.

6. Verfahren in einer optischen Netzwerkeinheit (121, 122, 123), die kommunikativ mit einem optischen Leitungsabschluss (110) verbunden ist, umfassend:
- das Empfangen eines Datenrahmens der physikalischen Schicht vom optischen Leitungsabschluss (110), wobei ein physikalischer Synchronisationsblock, der dem Datenrahmen der physikalischen Schicht entspricht, eine aufeinanderfolgende Sequenz am Anfang des Datenrahmens der physikalischen Schicht bildet, und wobei der physikalische Synchronisationsblock gemäß mindestens einem Teil eines Superrahmenzählers aktualisiert wird;
- das Lokalisieren des physikalischen Synchronisationsblocks;
- das Synchronisieren basierend auf dem physikalischen Synchronisationsblock;
- das Durchführen einer Inter-Codewort-Entschachtelung für den Datenrahmen der physikalischen Schicht basierend auf Parametern bezüglich der Inter-Codewort-Verschachtelung in einer Round-Robin-Weise, das Erhalten einer vorbestimmten Anzahl von Codewörtern, wobei die ersten N Codewörter in ihren ersten Bitwerten mindestens einen Block von b Bits des physikalischen Synchronisationsblocks umfassen, der dem Datenrahmen der physikalischen Schicht entspricht, N ≥ 2, b ≥ 1;
wobei die Blöcke des physikalischen Synchronisationsblocks auf den ersten N Codewörtern verschachtelt sind; und mindestens das erste Codewort zwei oder mehr Blöcke von b Bits des physikalischen Synchronisationsblocks umfasst;
- das Decodieren mindestens des ersten Codeworts und das Extrahieren verschachtelter Blöcke des physikalischen Synchronisationsblocks aus dem mindestens einen decodierten Codewort,
- das Erhalten mindestens eines Teils des decodierten physikalischen Synchronisationsblocks.

7. Verfahren nach Anspruch 6, wobei einer oder mehrere der Parameter bezüglich der Inter-Codewort-Verschachtelung vorbestimmt sind oder vom OLT (110) empfangen werden.

8. Verfahren nach einem der Ansprüche 6-7, ferner umfassend:
- das Bestimmen eines Satzes von Codewörtern, der einer Gruppe von ONUs entspricht, der es gemäß einer Satzkonfiguration zugewiesen ist, wobei die Satzkonfiguration vorbestimmt ist oder vom OLT (110) empfangen wird;
- das Decodieren des Satzes von Codewörtern.

9. Optischer Leitungsabschluss (110), der kommunikativ mit einer Vielzahl von optischen Netzwerkeinheiten (121, 122, 123) verbindbar ist, umfassend:
- Mittel zum Erhalten eines physikalischen Synchronisationsblocks, der einer Abwärtstrame entspricht;
- Mittel zum Aktualisieren des physikalischen Synchronisationsblocks basierend auf mindestens einem Teil eines Superrahmenzählers;
- ein Codewort-Erzeugungsmodul (810), konfiguriert zum Erzeugen einer vorbestimmten Anzahl von Codewörtern für eine Abwärtstrame,
wobei das Codewort-Erzeugungsmodul (810) ferner umfasst:
ein Vor-Verschachtelungsmodul, konfiguriert zum Erhalten eines physikalischen Synchronisationsblocks, der der Abwärtstrame entspricht, wobei der physikalische Synchronisationsblock gemäß mindestens einem Teil eines Superrahmenzählers aktualisiert wird, und zum Verschachteln sequentieller Blöcke von b Bits des physikalischen Synchronisationsblocks, der der Abwärtstrame entspricht, vom Anfang des physikalischen Synchronisationsblocks auf die ersten N Codewörter in einer Round-Robin-Weise, sodass die ersten N Codewörter in ihren ersten Bitwerten mindestens einen Block von b Bits des physikalischen Synchronisationsblocks umfassen, N ≥ 2, b ≥ 1, und mindestens eines der ersten N Codewörter jeweils zwei oder mehr Blöcke von b Bits des physikalischen Synchronisationsblocks umfasst; und
Mittel zum Codieren der vorbestimmten Anzahl von Codewörtern mittels einer Vorwärtsfehlerkorrektur, FEC-Code;
- ein Inter-Codewort-Verschachtelungsmodul (820), konfiguriert zum Durchführen an der vorbestimmten Anzahl von FEC-codierten Codewörtern, wodurch ein Datenrahmen der physikalischen Schicht erhalten wird, wobei der physikalische Synchronisationsblock als eine aufeinanderfolgende Sequenz am Anfang des Datenrahmens der physikalischen Schicht wiederhergestellt wird; wobei das Inter-Codewort-Verschachtelungsmodul (820) ferner konfiguriert ist zum Verschachteln von M Codewörtern, wobei eine Länge der Verschachtelungsblöcke b Bits beträgt, wobei M=N;
- ein Sendemodul (830), konfiguriert zum Übertragen des Datenrahmens der physikalischen Schicht an die Vielzahl von optischen Netzwerkeinheiten (121, 122, 123).

10. Optischer Leitungsabschluss (110) nach Anspruch 9, wobei das Codewort-Erzeugungsmodul (810) ferner umfasst:
ein Aktualisierungsmodul, konfiguriert zum Aktualisieren mindestens eines Teils der Blöcke des physikalischen Synchronisationsblocks in einem Codewort basierend auf mindestens einem Teil des Superrahmenzählers.

11. Optische Netzwerkeinheit (121, 122, 123), die kommunikativ mit einem optischen Leitungsabschluss (110) verbindbar ist, umfassend:
- ein Empfangsmodul (910), konfiguriert zum Empfangen eines Datenrahmens der physikalischen Schicht vom optischen Leitungsabschluss (110), wobei ein physikalischer Synchronisationsblock, der dem Datenrahmen der physikalischen Schicht entspricht, eine aufeinanderfolgende Sequenz am Anfang des Datenrahmens der physikalischen Schicht bildet, und wobei der physikalische Synchronisationsblock gemäß mindestens einem Teil eines Superrahmenzählers aktualisiert wird;
- ein Modul zum Lokalisieren des physikalischen Synchronisationsblocks;
- ein Modul zum Synchronisieren basierend auf dem physikalischen Synchronisationsblock;
- ein Inter-Codewort-Entschachtelungsmodul (920), konfiguriert zum Durchführen einer Inter-Codewort-Entschachtelung für den Datenrahmen der physikalischen Schicht basierend auf Parametern bezüglich der Inter-Codewort-Verschachtelung in einer Round-Robin-Weise, wobei eine vorbestimmte Anzahl von Codewörtern erhalten wird, wobei die ersten N Codewörter in ihren ersten Bitwerten mindestens einen Block von b Bits des physikalischen Synchronisationsblocks umfassen, der dem Datenrahmen der physikalischen Schicht entspricht, N ≥ 2, b ≥ 1; wobei die Blöcke des physikalischen Synchronisationsblocks auf den ersten N Codewörtern verschachtelt sind; und mindestens das erste Codewort zwei oder mehr Blöcke von b Bits des physikalischen Synchronisationsblocks umfasst;
- Mittel zum Decodieren mindestens des ersten Codeworts und zum Extrahieren verschachtelter Blöcke des physikalischen Synchronisationsblocks aus dem mindestens einen decodierten Codewort,
- Mittel zum Erhalten mindestens eines Teils des decodierten physikalischen Synchronisationsblocks.

## Revendications

1. Procédé dans un terminal de ligne optique (110) connecté de manière communicative à une pluralité d'unités de réseau optique (121, 122, 123), comprenant :
- l'obtention d'un bloc de synchronisation physique correspondant à une trame descendante,
- la mise à jour du bloc de synchronisation physique sur la base d'au moins une partie d'un compteur de super trame ;
- la génération d'un nombre prédéterminé de mots de code pour la trame descendante, comprenant :
- le pré-entrelacement de blocs séquentiels de b bits du bloc de synchronisation physique correspondant à la trame descendante depuis le début du bloc de synchronisation physique sur les N premiers mots de code selon un mode à tour de rôle, de sorte que les N premiers mots de code comprennent dans leurs premières valeurs de bits au moins un bloc de b bits du bloc de synchronisation physique, N ≥ 2, b ≥ 1, et au moins un des N premiers mots de code comprend respectivement deux ou plusieurs blocs de b bits du bloc de synchronisation physique, et
- l'encodage du nombre prédéterminé de mots de code au moyen d'une correction d'erreur directe, code FEC ;
- la réalisation d'un entrelacement inter-mots de code sur le nombre prédéterminé de mots de code encodés FEC, obtenant ainsi une trame de données de couche physique, dans laquelle le bloc de synchronisation physique est rétabli en tant que séquence consécutive au début de la trame de données de couche physique ;
- la transmission de la trame de données de couche physique à la pluralité d'unités de réseau optique (121, 122, 123) ; dans lequel l'entrelacement inter-mots de code comprend :
- l'entrelacement de M mots de code, dans lequel une longueur des blocs d'entrelacement est de b bits, dans lequel, M=N.

2. Procédé selon la revendication 1, comprenant en outre :
- la communication d'au moins un parmi b et M aux ONU (121, 122, 123).

3. Procédé selon l'une quelconque des revendications 1-2, comprenant en outre :
- la mise à jour d'au moins une partie des blocs du bloc de synchronisation physique dans un mot de code sur la base d'au moins une partie du compteur de super trame.

4. Procédé selon l'une quelconque des revendications 1-3, comprenant en outre :
- le regroupement des données pour les ONU (121, 122, 123) en G ensembles de mots de code, dans lequel un ensemble de mots de code comprend des données pour un sous-ensemble des ONU (121, 122, 123).

5. Procédé selon la revendication 4, dans lequel les N premiers mots de code font partie d'un ensemble différent parmi les G ensembles de mots de code, et dans lequel G est égal à N.

6. Procédé dans une unité de réseau optique (121, 122, 123) connectée de manière communicative à un terminal de ligne optique (110), comprenant :
- la réception d'une trame de données de couche physique depuis le terminal de ligne optique (110), dans lequel un bloc de synchronisation physique correspondant à la trame de données de couche physique forme une séquence consécutive au début de la trame de données de couche physique, et dans lequel le bloc de synchronisation physique est mis à jour selon au moins une partie d'un compteur de super trame ;
- la localisation du bloc de synchronisation physique ;
- la synchronisation sur la base du bloc de synchronisation physique ;
- la réalisation d'un dés-entrelacement inter-mots de code pour la trame de données de couche physique sur la base de paramètres liés à l'entrelacement inter-mots de code selon un mode à tour de rôle, l'obtention d'un nombre prédéterminé de mots de code, dans lequel les N premiers mots de code comprennent dans leurs premières valeurs de bits au moins un bloc de b bits du bloc de synchronisation physique correspondant à la trame de données de couche physique, N ≥ 2, b ≥ 1 ;
dans lequel les blocs du bloc de synchronisation physique sont entrelacés sur les N premiers mots de code ; et au moins le premier mot de code comprend deux ou plusieurs blocs de b bits du bloc de synchronisation physique ;
- le décodage d'au moins le premier mot de code et l'extraction de blocs entrelacés du bloc de synchronisation physique depuis le au moins un mot de code décodé,
- l'obtention d'au moins une partie du bloc de synchronisation physique décodé.

7. Procédé selon la revendication 6, dans lequel un ou plusieurs des paramètres liés à l'entrelacement inter-mots de code sont prédéterminés ou reçus du OLT (110).

8. Procédé selon l'une quelconque des revendications 6-7, comprenant en outre :
- la détermination d'un ensemble de mots de code correspondant à un groupe d'ONU auquel il est affecté selon une configuration d'ensemble, dans lequel la configuration d'ensemble est prédéterminée ou reçue du OLT (110) ;
- le décodage de l'ensemble de mots de code.

9. Terminal de ligne optique (110) pouvant être connecté de manière communicative à une pluralité d'unités de réseau optique (121, 122, 123), comprenant :
- des moyens pour obtenir un bloc de synchronisation physique correspondant à une trame descendante ;
- des moyens pour mettre à jour le bloc de synchronisation physique sur la base d'au moins une partie d'un compteur de super trame ;
- un module de génération de mots de code (810), configuré pour générer un nombre prédéterminé de mots de code pour une trame descendante,
dans lequel le module de génération de mots de code (810) comprend en outre :
un module de pré-entrelacement, configuré pour obtenir un bloc de synchronisation physique correspondant à la trame descendante, dans lequel le bloc de synchronisation physique est mis à jour selon au moins une partie d'un compteur de super trame, et pour entrelacer des blocs séquentiels de b bits du bloc de synchronisation physique correspondant à la trame descendante depuis le début du bloc de synchronisation physique sur les N premiers mots de code selon un mode à tour de rôle, de sorte que les N premiers mots de code comprennent dans leurs premières valeurs de bits au moins un bloc de b bits du bloc de synchronisation physique, N ≥ 2, b ≥ 1, et
au moins un des N premiers mots de code comprend respectivement deux ou plusieurs blocs de b bits du bloc de synchronisation physique ; et
- des moyens pour encoder le nombre prédéterminé de mots de code au moyen d'une correction d'erreur directe, code FEC ;
- un module d'entrelacement inter-mots de code (820), configuré pour réaliser sur le nombre prédéterminé de mots de code encodés FEC, obtenant ainsi une trame de données de couche physique, dans laquelle le bloc de synchronisation physique est rétabli en tant que séquence consécutive au début de la trame de données de couche physique ; dans lequel le module d'entrelacement inter-mots de code (820) est en outre configuré pour entrelacer M mots de code, dans lequel une longueur des blocs d'entrelacement est de b bits, dans lequel, M=N ;
- un module de transmission (830), configuré pour transmettre la trame de données de couche physique à la pluralité d'unités de réseau optique (121, 122, 123).

10. Terminal de ligne optique (110) selon la revendication 9, dans lequel le module de génération de mots de code (810) comprend en outre :
un module de mise à jour, configuré pour mettre à jour au moins une partie des blocs du bloc de synchronisation physique dans un mot de code sur la base d'au moins une partie du compteur de super trame.

11. Unité de réseau optique (121, 122, 123) pouvant être connectée de manière communicative à un terminal de ligne optique (110), comprenant :
- un module de réception (910), configuré pour recevoir une trame de données de couche physique depuis le terminal de ligne optique (110), dans lequel un bloc de synchronisation physique correspondant à la trame de données de couche physique forme une séquence consécutive au début de la trame de données de couche physique, et dans lequel le bloc de synchronisation physique est mis à jour selon au moins une partie d'un compteur de super trame ;
- un module pour localiser le bloc de synchronisation physique ;
- un module pour synchroniser sur la base du bloc de synchronisation physique ;
- un module de dés-entrelacement inter-mots de code (920), configuré pour réaliser un dés-entrelacement inter-mots de code pour la trame de données de couche physique sur la base de paramètres liés à l'entrelacement inter-mots de code selon un mode à tour de rôle, obtenant un nombre prédéterminé de mots de code, dans lequel les N premiers mots de code comprennent dans leurs premières valeurs de bits au moins un bloc de b bits du bloc de synchronisation physique correspondant à la trame de données de couche physique, N ≥ 2, b ≥ 1 ; dans lequel les blocs du bloc de synchronisation physique sont entrelacés sur les N premiers mots de code ; et au moins le premier mot de code comprend deux ou plusieurs blocs de b bits du bloc de synchronisation physique ;
- des moyens pour décoder au moins le premier mot de code et extraire les blocs entrelacés du bloc de synchronisation physique depuis le au moins un mot de code décodé,
- des moyens pour obtenir au moins une partie du bloc de synchronisation physique décodé.
